# EUROPÄISCHE PATENTANMELDUNG

(11) **EP 3 909 934 A1**
(43) Veröffentlichungstag der Anmeldung: **17.11.2021**
(21) Anmeldenummer: 20174882.9
(22) Anmeldetag: 15.05.2020
(51) Int. Cl.: C04B 28/00, C04B 40/06

(54) **FEIN AUFGEMAHLENER HÜTTENSAND IN EINEM ZEMENTÄREN MEHRKOMPONENTEN-MÖRTELSYSTEM FÜR DEN EINSATZ ALS ANORGANISCHES CHEMISCHES BEFESTIGUNGSSYSTEM**

(71) Anmelder: Hilti Aktiengesellschaft, 9494 Schaan (LI)
(72) Erfinder: Schönlein, Markus, 82205 Gilching (DE); Pfeil, Armin, 86899 Landsberg am Lech (DE); Middendorf, Bernhard, 34379 Calden (DE); Schade, Tim, 34125 Kassel (DE); Wetzel, Alexander, 34302 Guxhagen (DE)
(74) Vertreter: Hilti Aktiengesellschaft Corporate Intellectual Property

(57) **Zusammenfassung**

Es wird ein zementäres Mehrkomponenten-Mörtelsystem umfassend fein aufgemahlenen Hüttensand mit einer Mahlfeinheit im Bereich von 5000 bis 15000 cm²/g, für den Einsatz als anorganisches chemisches Befestigungssystem für Verankerungselemente in mineralischen Untergründen beschrieben.

## Beschreibung

### Gebiet der Erfindung

Die Erfindung liegt auf dem Gebiet der chemischen Befestigung von Verankerungselementen in mineralischen Untergründen im Bereich der Bauindustrie und Befestigungstechnik, und betrifft insbesondere die chemische Befestigung von Verankerungselementen mittels eines anorganischen chemischen Befestigungssystems basierend auf fein aufgemahlenen Hüttensand in einem zementären Mehrkomponenten-Mörtelsystem.

### Stand der Technik

Verbundmörtel zum Befestigen von Verankerungselementen in mineralischen Untergründen im Bereich der Bauindustrie und Befestigungstechnik sind bekannt. Diese Verbundmörtel basieren fast ausschließlich auf organischen epoxid-haltigen Harz/Härtersystemen. Es ist jedoch allgemein bekannt, dass solche Systeme umweltschädlich, teuer, potenziell gefährlich und/oder giftig für die Umwelt und die Person sind, die sie handhabt, und sie müssen häufig speziell gekennzeichnet werden. Darüber hinaus weisen organische Systeme häufig eine stark verringerte Stabilität auf, wenn sie starkem Sonnenlicht oder auf andere Weise erhöhten Temperaturen ausgesetzt werden, wodurch ihre mechanische Leistung bei der chemischen Befestigung von Verankerungselementen verringert wird.

Es besteht daher ein Bedarf an einem gebrauchsfertigen zementären Mehrkomponenten-Mörtelsystem, vorzugsweise einem zementären Zweikomponenten-Mörtelsystem, das den Systemen des Standes der Technik in Bezug auf Umweltaspekte, Gesundheit und Sicherheit, Handhabung, Lagerzeit und einem guten Gleichgewicht zwischen Abbinden und Aushärten überlegen ist. Darüber hinaus ist es von Interesse, ein System bereitzustellen, das zur chemischen Befestigung von Verankerungselementen in mineralischen Untergründen verwendet werden kann, ohne die Handhabung, Eigenschaften und die mechanische Leistung des chemischen Befestigungssystems nachteilig zu beeinflussen. Insbesondere ist ein zementäres Mehrkomponenten-Mörtelsystem wünschenswert, dass sich durch hervorragende Lastwerte auszeichnet.

In Anbetracht des Vorstehenden ist es eine Aufgabe der vorliegenden Erfindung, ein zementäres System, insbesondere ein zementäres Mehrkomponenten-Mörtelsystem, im speziellen ein zementäres Zweikomponenten-Mörtelsystem, bereitzustellen, das die Nachteile der Systeme des Standes der Technik überwindet. Insbesondere ist es eine Aufgabe ein gebrauchsfertiges zementäres Mehrkomponenten-Mörtelsystem bereitzustellen, das einfach zu handhaben und umweltfreundlich ist, das vor Gebrauch über einen bestimmten Zeitraum stabil gelagert werden kann und ein gutes Gleichgewicht zwischen Abbinden und Aushärten aufweist, und auch unter dem Einfluss erhöhter Temperaturen eine hervorragende mechanische Leistung bei der chemischen Befestigung von Verankerungselementen in mineralischen Untergründen aufweist.

Darüber hinaus ist es eine Aufgabe der vorliegenden Erfindung, ein zementäres Mehrkomponenten-Mörtelsystem bereitzustellen, das zur chemischen Befestigung von Verankerungsmitteln, vorzugsweise von Metallelementen, in mineralischen Untergründen, wie Bauwerken aus Mauerwerk, Naturstein, Beton, Durchlässigkeitsbeton oder dergleichen verwendet werden kann.

Diese und weitere Aufgaben, die aus der folgenden Beschreibung der Erfindung ersichtlich sind, werden durch die vorliegende Erfindung, wie sie in den unabhängigen Ansprüchen beschrieben ist, gelöst. Die abhängigen Ansprüche beziehen sich auf bevorzugte Ausführungsformen.

### ZUSAMMENFASSUNG DER ERFINDUNG

Die vorliegende Erfindung betrifft ein zementäres Mehrkomponenten-Mörtelsystem umfassend fein aufgemahlenen Hüttensand mit einer Mahlfeinheit im Bereich von 5000 bis 15000 cm²/g, das für den Einsatz als anorganisches chemisches Befestigungssystem für Verankerungselemente in mineralischen Untergründen bestens geeignet ist, um hohe Lastwerte zu erreichen. Insbesondere betrifft die vorliegende Erfindung ein zementäres Mehrkomponenten-Mörtelsystem umfassend feinaufgemahlenen Hüttensand mit einer Mahlfeinheit im Bereich von 5000 bis 15000 cm²/g, und Silikastaub, das für den Einsatz als anorganisches chemisches Befestigungssystem für Verankerungselemente in mineralischen Untergründen bestens geeignet ist, um hohe Lastwerte zu erreichen.

Weiterhin betrifft die vorliegende Erfindung die Verwendung eines solchen zementären Mehrkomponenten-Mörtelsystems zur chemischen Befestigung von Verankerungsmitteln, vorzugsweise von Metallelementen, in mineralischen Untergründen, wie Bauwerken aus Mauerwerk, Naturstein, Beton, Durchlässigkeitsbeton oder dergleichen.

Noch weiterhin betrifft die vorliegende Erfindung die Verwendung von fein aufgemahlenem Hüttensand mit einer Mahlfeinheit im Bereich von 5000 bis 15000 cm²/g in einem zementären Mörtelsystem als anorganisches chemisches Befestigungssystem für Verankerungselemente in mineralischen Untergründen, zur Erhöhung der Lastwerte.

Andere Aufgaben und Merkmale dieser Erfindung sind zum Teil offensichtlich und werden zum Teil im Folgenden erläutert. Insbesondere wird der Gegenstand der vorliegenden Erfindung im Detail durch die Ausführungsbeispiele beschrieben.

### AUSFÜHRLICHE BESCHREIBUNG DER ERFINDUNG

Die folgenden Begriffe werden im Rahmen der vorliegenden Erfindung verwendet:
Der Begriff "Bindemittel" oder auch "Bindemittel-Komponente" bezieht sich im Rahmen der vorliegenden Erfindung auf den zementären Bestandteil sowie optionaler Komponenten wie beispielsweise Füllstoffe, des Mehrkomponenten-Mörtelsystems. Insbesondere wird dieser auch als A-Komponente bezeichnet.

Der Begriff "Initiator" oder auch "Initiator-Komponente" bezieht sich im Rahmen der vorliegenden Erfindung auf den wässrigen Alkalisilicat-basierten Bestandteil, der ein Ansteifen, Erstarren und Erhärten als Folgereaktion auslöst. Insbesondere wird dieser auch als B-Komponente bezeichnet.

Die Begriffe "aufweisen", "mit" und "haben" sollen einschließend sein und bedeuten, dass auch andere als die genannten Elemente gemeint sein können.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Verschiedene Zementarten, deren Zusammensetzung und deren Anwendungsbereiche sind aus dem Stand der Technik bekannt, jedoch ist deren Einsatz als anorganisches chemisches Befestigungssystem weithingehend noch unbekannt. Insbesondere der Einsatz eines zementären Mehrkomponenten-Mörtelsystems auf Basis von fein aufgemahlenem Hüttensand.

Es ist nun herausgefunden worden, dass ein zementäres Mehrkomponenten-Mörtelsystem umfassend fein aufgemahlenen Hüttensand mit einer Mahlfeinheit im Bereich von 5000 bis 15000 cm²/g, für den Einsatz als anorganisches chemisches Befestigungssystem für Verankerungselemente in mineralischen Untergründen bestens geeignet ist, um hohe Lastwerte zu erreichen, insbesondere ein zementäres Mehrkomponenten-Mörtelsystem umfassend fein aufgemahlenen Hüttensand mit einer Mahlfeinheit im Bereich von 5000 bis 15000 cm²/g, und Silikastaub.

Darüber hinaus zeichnet sich ein solches System, insbesondere das zementäre Mehrkomponenten-Mörtelsystem, durch positive Vorteile in Bezug auf Umweltaspekte, Gesundheit und Sicherheit, Handhabung, Lagerzeit und einem guten Gleichgewicht zwischen Abbinden und Aushärten aus, ohne die Handhabung, Eigenschaften und die mechanische Leistung des chemischen Befestigungssystems nachteilig zu beeinflussen.

Daher betrifft die vorliegende Erfindung ein zementäres Mehrkomponenten-Mörtelsystem umfassend fein aufgemahlenen Hüttensand mit einer Mahlfeinheit im Bereich von 5000 bis 15000 cm²/g, für den Einsatz als anorganisches chemisches Befestigungssystem für Verankerungselemente in mineralischen Untergründen. Insbesondere betrifft die vorliegende Erfindung ein zementäres Mehrkomponenten-Mörtelsystem umfassend fein aufgemahlenen Hüttensand mit einer Mahlfeinheit im Bereich von 5000 bis 15000 cm²/g, und Silikastaub, für den Einsatz als anorganisches chemisches Befestigungssystem für Verankerungselemente in mineralischen Untergründen.

Das zementäre Mehrkomponenten-Mörtelsystem umfasst vorzugsweise eine Bindemittel-Komponente und eine Initiator-Komponente. Es ist bevorzugt, dass der fein aufgemahlene Hüttensand in der Bindemittel-Komponente vorliegt. Besonders bevorzugt ist, dass das zementäre Mehrkomponenten-Mörtelsystem ein Zweikomponenten-Mörtelsystem ist und eine pulverförmige zementäre Bindemittel-Komponente und eine wässrige, alkalische Initiator-Komponente umfasst.

Der Hüttensand, der Hauptbestandteil von sogenannten Portlandhütten- und Hochofenzementen ist, des zementären Mehrkomponenten-Mörtelsystems umfasst von 30 bis 45 % Calciumoxid (CaO), von 30 bis 45 % Siliciumdioxid (SiO₂), von 1 bis 15 % Aluminiumoxid (Al₂O₃) und von 4 bis 17 % Magnesiumoxid (MgO), und 0,5 bis 1 % Schwefel (S). Weitere Kennwerte des Hüttensandes sind Eisenoxid (Fe₂O₃), Natriumoxid (Na₂O), Kaliumoxid (K₂O), Chlorid, Schwefeltrioxid (SO₃) und Manganoxid (Mn₂O₃), die vorzugweise weniger als 5 % des Hüttensandes ausmachen.

Das zementäre Mehrkomponenten-Mörtelsystem der vorliegenden Erfindung umfasst fein aufgemahlenen Hüttensand mit einer Mahlfeinheit im Bereich von 5000 bis 15000 cm²/g, bevorzugt in einem Bereich von 6000 bis 15000 cm²/g, am meisten bevorzugt in einem Bereich von 8000 bis 13000 cm²/g. In einer besonders bevorzugten Ausführungsform des zementären Mehrkomponenten-Mörtelsystems weist der fein aufgemahlene Hüttensand eine Mahlfeinheit im Bereich von 9000 bis 12000 cm²/g auf.

Das zementäre Mehrkomponenten-Mörtelsystem der vorliegenden Erfindung umfasst vorzugsweise den fein aufgemahlenen Hüttensand in einem Bereich von 1 Gew.-% bis 60 Gew.-%, mehr bevorzugt von 10 Gew.-% bis 50 Gew.-%, am meisten bevorzugt in einem Bereich von 20 Gew.-% bis 40 Gew.-%, bezogen auf das Gesamtgewicht des der Bindemittel-Komponente.

Vorzugsweise umfasst das zementäre Mehrkomponenten-Mörtelsystem ferner Silikastaub. Bevorzugt liegt der Silikastaub in der Bindemittel-Komponente vor.

Der Silikastaub des zementären Mehrkomponenten-Mörtelsystem liegt in einem Bereich von 1 Gew.-% bis 10 Gew.-%, vorzugsweise von 2 Gew.-% bis 8 Gew.-%, am meisten bevorzugt in einem Bereich von 4 Gew.-% bis 6 Gew.-%, bezogen auf das Gesamtgewicht der Bindemittel-Komponente, vor. Vorzugsweise hat der Silikastaub eine durchschnittliche Partikelgröße von 0,4 µm und eine Oberfläche von 180.000 bis 220.000 cm²/g bzw. 18-22 m²/g.

Alternativ kann der Silikastaub auch durch Puzzolane-Materialien bzw. durch Materialien mit Puzzolanen-Eigenschaften oder durch andere feine inerte Füllstoffe ersetzt werden. Dies sind zum Beispiel Korund, Calcit, Dolomit, Ziegelmehl, Reisschalenasche, Phonolith, calcinierter Ton und Metakaolin.

In einer bevorzugten Ausführungsform des zementären Mehrkomponenten-Mörtelsystem liegt der Silikastaub in einem Bereich von 3 Gew.-% bis 7 Gew.-%, bezogen auf das Gesamtgewicht der Bindemittel-Komponente, vor.

Des Weiteren kann mindestens ein Füllstoff oder Füllstoff-Mischungen in der Bindemittel-Komponente vorhanden sein. Diese sind vorzugsweise ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Der mindestens eine Füllstoff des zementären Mehrkomponenten-Mörtelsystems liegt vorzugsweise in einem Bereich von 20 Gew.-% bis 80 Gew.-%, bevorzugter von 30 Gew.-% bis 70 Gew.-%, am meisten bevorzugt in einem Bereich von 40 Gew.-% bis 60 Gew.-%, bezogen auf das Gesamtgewicht der Bindemittel-Komponente vor.

In einer bevorzugten Ausführungsform des zementären Mehrkomponenten-Mörtelsystem ist der Füllstoff Sand und liegt in einem Bereich von 45 bis 55 Gew.-%, bezogen auf das Gesamtgewicht der Bindemittel-Komponente, vor.

In einer besonders bevorzugten Ausführungsform der vorliegenden Erfindung ist der Füllstoff eine Mischung aus Sand und Quarzmehl. Vorzugsweise liegt der Sand in einem Bereich von 45 Gew.-% bis 55 Gew.-% und das Quarzmehl in einem Bereich von 5 Gew.-% bis 10 Gew.-% bezogen, auf das Gesamtgewicht der Bindemittel-Komponente, vor.

Des Weiteren kann die Bindemittel-Komponente weitere Zemente enthalten, wie beispielsweise calciumaluminat-basierter Zement. Des Weiteren kann die Bindemittel-Komponente Fasern enthalten, wie beispielsweise Mineralfasern, Chemiefasern, Naturfasern, Kunstfasern, Fasern aus natürlichen oder synthetischen Polymeren, Fasern aus anorganischen Stoffen, insbesondere Carbonfasern oder Glasfasern.

Die Initiator-Komponente des Mehrkomponenten-Mörtelsystems umfasst einen Alkalisilicat-basierten Bestandteil, insbesondere ein Alkalimetallsilicat-basierten Bestandteil, wobei das Alkalimetallsilicat ausgewählt ist aus der Gruppe bestehend aus Natriumsilicat, Kaliumsilicat, Lithiumsilicat, Modifikationen davon, Mischungen davon und wässrigen Lösungen davon.

It is also possible, that component B as used in the present invention comprises an alkalior earth alkali hydroxide or -carbonate, such as lithium hydroxide, sodium hydroxide, potassium hydroxide, calcium hydroxide, magnesium hydroxide, lithium carbonate, sodium carbonate or potassium carbonate, mixtures thereof or aqueous solutions thereof.

In einer bevorzugten Ausführungsform ist der in der Initiator-Komponente verwendete Alkalisilicat-basierte Bestandteil eine wässrige Lösung von Kaliumsilikat und Kaliumhydroxid. In einer besonders bevorzugten Ausführungsform ist die Initiator-Komponente eine wässrige Lösung von 10 mol/l KOH und 1,72 mol/l Kaliumsilicat (Betol® K 35 T, woellner, Deutschland).

In einer bevorzugten Ausführungsform der vorliegenden Erfindung umfasst die Alkalisilicat-basierte Initiator-Komponente 1 bis 50 Gew.-% Silikat, vorzugsweise 10 bis 40 Gew.-%, besonders bevorzugt 15 bis 30 Gew.-%, bezogen auf das Gesamtgewicht des wässrigen Alkalisilikats.

Die Initiator-Komponente umfasst mindestens etwa 0,01 Gew.-%, vorzugsweise mindestens 0,02 Gew.-%, besonders bevorzugt mindestens etwa 0,05 Gew.-%, besonders bevorzugt mindestens 1 Gew.-%, von etwa 0,01 Gew.-% bis etwa 40 Gew.-%, vorzugsweise von etwa 0,02 Gew.-% bis etwa 35 Gew.-%, mehr vorzugsweise von etwa 0,05 Gew.-% bis ca. 30 Gew.-%, besonders bevorzugt von etwa 1 Gew.-% bis ca. 25 Gew.-% des Alkalisilicat-basierten Bestandteils, bezogen auf das Gesamtgewicht von Initiator-Komponente.

Die Initiator-Komponente des Mehrkomponenten-Mörtelsystems umfasst optional ein Fließmittel. Das optionale Fließmittel liegt in einem Bereich von 1 Gew.-% bis 30 Gew.-%, vorzugsweise von 5 Gew.-% bis 25 Gew.-%, am meisten bevorzugt in einem Bereich von 10 Gew.-% bis 20 Gew.-%, bezogen auf das Gesamtgewicht der Initiator-Komponente, vor. Das optionale Fließmittel ist ausgewählt aus der Gruppe bestehend aus Polyacrylsäurepolymeren mit niedrigem Molekulargewicht (LMW), Superweichmachern aus der Familie von Polyphosphonatpolyox und Polycarbonatpolyox, Polykondensaten, z.B. Naphthalin-Sulfonsäure-Formaldehyd-Polykondensat oder Melamin-Sulfonsäure-Formaldehyd-Polykondensat, Lignosulfonaten und Ethacryl-Superweichmachern aus der Polycarboxylatether-Gruppe, und Mischungen davon, zum Beispiel Ethacryl® G (Coatex, Arkema Group, Frankreich), Acumer® 1051 (Rohm und Haas, UK) oder Sika® VisoCrete®-20 HE (Sika, Deutschland). Geeignete Fließmittel sind im Handel erhältliche Produkte.

In einer ganz besonderen Ausführungsform des zementären Mehrkomponenten-Mörtelsystems beträgt der Wasseranteil 30 Gew.-% bis 50 Gew.-% und der absolute Fließmittelanteil 5 Gew.-% bis 10 Gew.-%, bezogen auf das Gesamtgewicht der Initiator-Komponente.

Des Weiteren kann mindestens ein Füllstoff oder Füllstoff-Mischungen in der Initiator-Komponente vorhanden sein. Diese sind vorzugsweise ausgewählt aus der Gruppe bestehend aus Quarz, Sand, Quarzmehl, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

Die Initiator-Komponente kann zusätzlich ein Verdickungsmittel umfassen. Das Verdickungsmittel, kann ausgewählt sein aus der Gruppe bestehend aus Bentonit, Kieselsäure, Verdickungsmitteln auf der Basis von Acrylat, wie alkalilöslichen oder alkaliquellbaren Emulsionen, Quarzstaub, Ton und Titanat-Chelierungsmitteln. Angeführte Beispiele sind Polyvinylalkohol (PVA), hydrophob modifizierte alkalilösliche Emulsionen (HASE), hydrophob modifizierte Ethylenoxi-durethan-Polymere, die im Stand der Technik als HEUR bekannt sind, und Cellulose-Verdickungsmittel, wie Hydroxymethylcellulose (HMC), Hydroxyethylcellulose (HEC), hydrophob modifizierte Hydroxyethylcellulose (HMHEC), Natriumcarboxymethylcellulose (SCMC), Natriumcarboxymethyl-2-hydroxyethylcellulose, 2-Hydroxypropylmethylcellulose, 2-Hydroxyethylmethylcellulose, 2-Hydroxybutylmethylcellulose, 2-Hydroxyethylethylcellulose, 2-Hydroxypropylcellulose, Attapulgitton und Mischungen davon. Geeignete Verdickungsmittel sind im Handel erhältliche Produkte, wie Optigel WX (BYK-Chemie GmbH, Deutschland), Rheolate 1 (Elementis GmbH, Deutschland) und Acrysol ASE-60 (The Dow Chemical Company).

Die Anwesenheit oben-genannter Bestandteile verändert die gesamte anorganische Beschaffenheit des zementären Mehrkomponenten-Mörtelsystems nicht.

Die A-Komponente oder Bindemittel-Komponente, die den fein aufgemahlenen Hüttensand mit einer Mahlfeinheit im Bereich von 5000 bis 15000 cm²/g, und den Silikastaub umfasst, liegt in fester Form vor, vorzugsweise in der Form eines Pulvers oder Staubes. Die B-Komponente oder Initiator-Komponente liegt in wässriger Form vor, gegebenenfalls in der Form einer Aufschlämmung oder Paste.

Das Gewichtsverhältnis zwischen der A-Komponente und der B-Komponente (A/B) liegt vorzugsweise zwischen 10/1 und 1/3, und beträgt vorzugsweise 8/1 - 4/1. Vorzugsweise umfasst das zementäre Mehrkomponenten-Mörtelsystem bis zu 80 Gew. % der A-Komponente und bis zu 40 Gew. % der B-Komponente.

Nach der getrennten Herstellung werden die A-Komponente und die B-Komponente in getrennte Behälter eingebracht, aus denen sie durch mechanisches Einwirken gemischt werden können. Insbesondere ist das zementäre Mehrkomponenten-Mörtelsystems ein Zweikomponenten-Mörtelsystem, vorzugsweise ein zementäres Zweikomponenten-Kapsel-System. Das System umfasst vorzugsweise zwei oder mehr Folienbeutel zum Trennen der härtbaren Bindemittel-Komponente und der Initiator-Komponente. Die Inhalte der Kammern, Glaskapseln oder Beuteln, wie Folienbeutel, die unter mechanischer Einwirkung, vorzugsweise durch Einbringen eines Verankerungselementes, miteinander gemischt werden, liegen vorzugsweise schon in einem Bohrloch vor. Die Anordnung in Mehrkammer-Kartuschen oder Eimern oder Sätzen von Kübeln ist auch möglich.

Das zementäre Mehrkomponenten-Mörtelsystem der vorliegenden Erfindung kann für eine chemische Befestigung von Verankerungselementen, vorzugsweise Metallelementen, wie Ankerstäben, insbesondere Gewindestäben, Bolzen, Stahlverstärkungsstangen oder dgl., in mineralischen Flächen, wie Strukturen aus Mauerwerk, Beton, durchlässigem Beton oder Naturstein, verwendet werden. Insbesondere kann das zementäre Mehrkomponenten-Mörtelsystem der vorliegenden Erfindung für eine chemische Befestigung von Verankerungselementen, wie Metallelementen, in Bohrlöchern verwendet werden. Es kann für Verankerungszwecke verwendet werden, die eine Erhöhung der Lastkapazität und/oder eine Erhöhung der Bindefestigkeit im gehärteten Zustand umfassen.

Außerdem kann das zementäre Mehrkomponenten-Mörtelsystem der vorliegenden Erfindung für die Anbringung von Fasern, Gelegen, Gewirken oder Verbundstoffen, insbesondere von Fasern mit hohem Modul, vorzugsweise von Kohlefasern, insbesondere zur Verstärkung von Gebäudestrukturen, zum Beispiel Wänden oder Decken oder Böden, und ferner für Montagekomponenten, wie Platten oder Blöcke, z.B. aus Stein, Glas oder Kunststoff, an Gebäuden oder Strukturelementen verwendet werden.

Insbesondere wird fein aufgemahlene Hüttensand mit einer Mahlfeinheit im Bereich von 5000 bis 15000 cm²/g, in einem zementären Mehrkomponenten-Mörtelsystem verwendet, um die Lastwerte zu erhöhen. Vorzugsweise wird fein aufgemahlener Hüttensand mit einer Mahlfeinheit im Bereich von 5000 bis 15000 cm²/g, und Silikastaub, in einem zementären Zweikomponenten-Mörtelsystem verwendet, um die Lastwerte zu erhöhen.

Die folgenden Beispiele veranschaulichen die Erfindung, ohne sie dadurch einzuschränken.

### BEISPIELE

### 1. Zusammensetzung des Hüttensandes

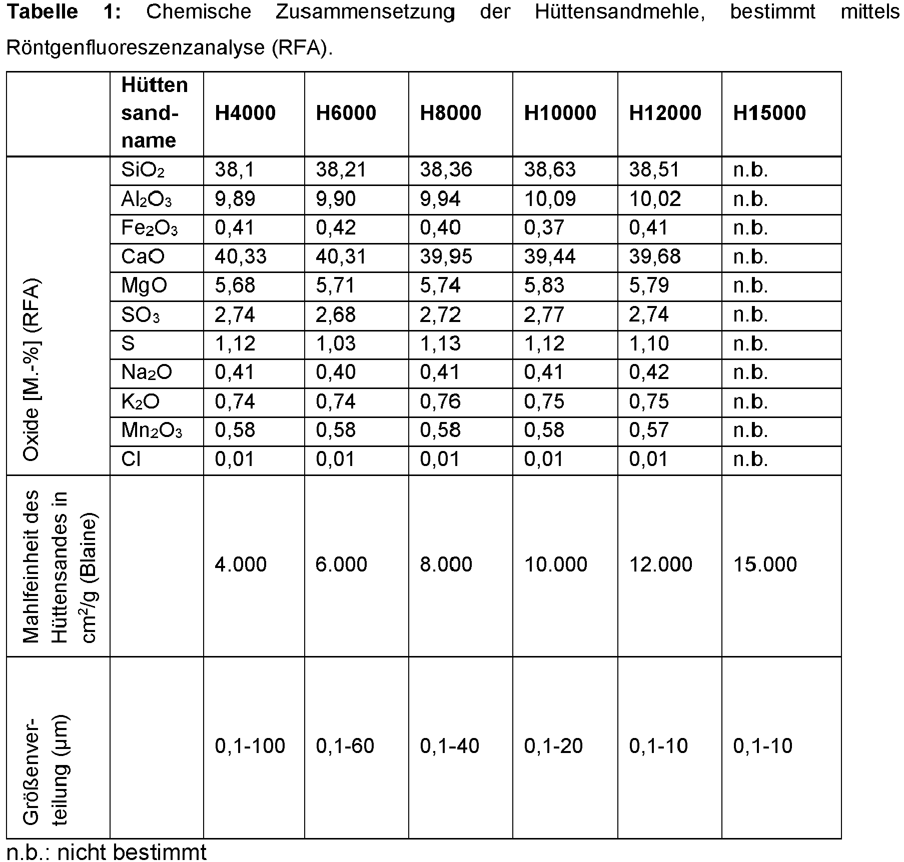

### 2. Herstellung von A-Komponente und B-Komponente

Die Herstellung der pulverförmigen Bindemittel-Komponente (A-Komponente) sowie der flüssigen Initiator-Komponente (B-Komponente) des Vergleichsbeispiels 1, 7, 9 und 11 und der erfindungsgemäßen Beispiele 2-6, 8, 10 und 12 erfolgt zunächst durch Vermischen der in den Tabellen 2 bzw. 3 angegebenen Bestandteile mit den in Tabelle 4 angegebenen Anteilen, die angegeben sind in Gew .-% ausgedrückt.

**Tabelle 2: Zusammensetzung der A-Komponente basierend auf feinaufgemahlenem Hüttensand (Gew.-%).**

| | Bindemittel | Bindemittel | Bindemittel | Bindemittel | Bindemittel | Bindemittel | Bindemittel | Füllstoff | Füllstoff |
|---|---|---|---|---|---|---|---|---|---|
| | **H4000** | **H6000** | **H8000** | **H10000** | **H12000** | **H15000** | **Silikastaub¹⁾** | **Sand²⁾** | **Quarzmehl³⁾** |
| **A0** | 34,5 | | | | | | 7,5 | 50 | 8 |
| **A1** | | 34,5 | | | | | 7,5 | 50 | 8 |
| **A2** | | | 34,5 | | | | 7,5 | 50 | 8 |
| **A3** | | | | 34,5 | | | 7,5 | 50 | 8 |
| **A4** | | | | | 34,5 | | 7,5 | 50 | 8 |
| **A5** | | | | | | 34,5 | 7,5 | 50 | 8 |

| | | | | | | | | | |
|---|---|---|---|---|---|---|---|---|---|
| ¹⁾ Silikastaub: Mahlfeinheit in cm²/g (Blaine) 18.000-22.000; Größenverteilung (µm) 0,1-1. ²⁾ Sand: Größenverteilung (µm) 125-1000. ³⁾ Quarzmehl: Größenverteilung (µm) 0,1-100. | | | | | | | | | |

**Tabelle 3: Zusammensetzung der B-Komponente (Gew.-%).**

| | Initiator | Initiator |
|---|---|---|
| | **KOH 10 mol/l** | **K₂SiO₃ 1,72 mol/l** |
| **B** | 50 | 50 |

**Table 4: Mischverhältnis von A-Komponente zu B-Komponente.**

| **A-Komponente** | **B-Komponente** | **B/A-Verhältnis** | **Wasser/Bindemittel-Verhältnis** |
|---|---|---|---|
| A0 | B | 0,132 | 0,2 |
| A1 | B | 0,150 | 0,225 |
| A2 | B | 0,165 | 0,25 |
| A3 | B | 0,182 | 0,275 |
| A4 | B | 0,198 | 0,3 |
| A5 | B | 0,231 | 0,35 |

### 3. Bestimmung der mechanischen Leistung

Nach der getrennten Herstellung werden die pulverförmige Bindemittel-Komponente A und die Initiator-Komponente B mit einem Mischer gemischt. Alle Proben werden 1 Minute lang gemischt. Die Mischungen werden in ein Edelstahlhülsenbohrloch mit einem Durchmesser von 12 mm, einer Verankerungstiefe von 32 mm und geschliffenen Hinterschnitten von 0,33 mm eingegossen. Unmittelbar nach dem Befüllen wird eine M8-Gewindestange mit einer Länge von 100 mm in das Bohrloch eingeführt.

Die Lastwerte der ausgehärteten Mörtelzusammensetzungen werden nach 24 Stunden mit einem Gerät zur Materialprüfung "Zwick Roell Z050" (Zwick GmbH & Co. KG, Ulm, Deutschland) bestimmt. Die Edelstahlhülse ist auf einer Platte befestigt, während die Gewindestange mit einer Mutter am Kraftmessgerät befestigt ist. Bei einer Vorlast von 500 N und einer Prüfgeschwindigkeit von 3 mm/min wird die Bruchlast durch mittiges Herausziehen der Gewindestange ermittelt. Jede Probe besteht aus einem Mittelwert von fünf Auszügen. Die Bruchlast wird als innere Festigkeit berechnet und in Tabelle 5 in N/mm² angegeben.

**Tabelle 5: Innere Festigkeit in N/mm².**

| **Beispiel** | **Komponenten** | **Temperatur** | **Abbindezeit in min** | **Innere Festigkeit in N/mm²** |
|---|---|---|---|---|
| **1** | A0+ B | 20°C | 26 | 23,5 |
| **2** | A1 + B | 20°C | 19 | 25,9 |
| **3** | A2 + B | 20°C | 15 | 27,1 |
| **4** | A3 + B | 20°C | 12 | 28,2 |
| **5** | A4 + B | 20°C | 10 | 29,9 |
| **6** | A5+ B | 20°C | 8 | 30,2 |
| **7** | A0 + B | 0°C | 90 | 4,2 |
| **8** | A4 + B | 0°C | 18 | 7,7 |
| **9** | A0 + B | 5°C | 55 | 11,0 |
| **10** | A4+ B | 5°C | 13,5 | 17,1 |
| **11** | A0 + B | 10°C | 36 | 16,4 |
| **12** | A4+ B | 10°C | 11,5 | 19,5 |

Wie aus Tabelle 5 ersichtlich ist, zeigen alle messbaren erfindungsgemäßen Systeme nach 24 Stunden Aushärtung erhebliche innere Festigkeiten sowie erhöhte Lastwerte und damit verbesserte mechanische Festigkeiten im Vergleich zum Vergleichssystem ohne erhöhte Feinheit.

Wie oben gezeigt wurde, sorgt die Verwendung von fein gemahlenen Bindemitteln der vorliegenden Erfindung, insbesondere mit einer Feinheit im Bereich von 5000 bis 15000 cm2/g, vorzugsweise einer Teilchenfeinheit von 6000 bis 12000 cm²/g für eine Erhöhung der Lastwerte und damit mechanische Festigkeit auch bei tiefen Temperaturen im Vergleich zu Systemen mit geringer Partikelfeinheit von 4000 cm2/g.

## Patentansprüche

1. Zementäres Mehrkomponenten-Mörtelsystem umfassend fein aufgemahlenen Hüttensand mit einer Mahlfeinheit im Bereich von 5000 bis 15000 cm²/g, für den Einsatz als anorganisches chemisches Befestigungssystem für Verankerungselemente in mineralischen Untergründen.

2. Zementäres Mehrkomponenten-Mörtelsystem nach Anspruch 1, ferner umfassend Silikastaub.

3. Zementäres Mehrkomponenten-Mörtelsystem n nach Anspruch 1 oder 2, ferner umfassend mindestens einen mineralischen Füllstoff ausgewählt aus der Gruppe bestehend aus Quarz, Sand, Quarzmehl, Ton, Flugasche, Hüttensand, Pigmente, Titanoxide, leichte Füllstoffe, Kalksteinfüllstoffen, Korund, Dolomit, alkalibeständigem Glas, zerkleinerten Steinen, Kiesen, Kieseln und Mischungen davon.

4. Zementäres Mehrkomponenten-Mörtelsystem nach einem der vorhergehenden Ansprüche, wobei das zementäre Mehrkomponenten-Mörtelsystem ein Zweikomponenten-Mörtelsystem ist, vorzugsweise ein Zweikomponenten-Kapsel-Mörtelsystem.

5. Zementäres Mehrkomponenten-Mörtelsystem nach Anspruch 4, wobei das Zweikomponenten-Kapsel-Mörtelsystem eine pulverförmige A-Komponente, umfassend den fein aufgemahlenen Hüttensand mit einer Mahlfeinheit im Bereich von 5000 bis 15000 cm²/g, und den Silikastaub, und eine wässrige B-Komponente, umfasst.

6. Zementäres Mehrkomponenten-Mörtelsystem nach Anspruch 5, wobei die wässrige **B-Komponente** einen Alkalisilicat-basierten Bestandteil umfasst.

7. Zementäres Mehrkomponenten-Mörtelsystem nach Anspruch 6, wobei der Alkalisilicat-basierten Bestandteil ein Alkalimetallsilicat umfasst, wobei das Alkalimetallsilicat ausgewählt ist aus der Gruppe bestehend aus Natriumsilicat, Kaliumsilicat, Lithiumsilicat, Modifikationen davon, Mischungen davon und wässrigen Lösungen davon.

8. Zementäres Mehrkomponenten-Mörtelsystem nach Anspruch 6 oder 7, wobei die wässrige **B-Komponente** eine wässrige Lösung aus Kaliumhydroxid und Kaliumsilicat ist.

9. Zementäres Mehrkomponenten-Mörtelsystem nach einem der vorhergehenden Ansprüche, wobei der fein aufgemahlenen Hüttensand in einem Bereich von 1 Gew.-% bis 50 Gew.-%, bezogen auf das Gesamtgewicht der Bindemittel-Komponente, vorliegt.

10. Zementäres Mehrkomponenten-Mörtelsystem nach einem der vorhergehenden Ansprüche, wobei der Silikastaub in einem Bereich von 1 Gew.-% bis 10 Gew.-%, bezogen auf das Gesamtgewicht der Bindemittel-Komponente, vorliegt.

11. Verwendung von fein aufgemahlenen Hüttensand mit einer Mahlfeinheit im Bereich von 5000 bis 15000 cm²/g in einem zementären Mehrkomponenten-Mörtelsystem als anorganisches chemisches Befestigungssystem für Verankerungselemente in mineralischen Untergründen, zur Erhöhung der Lastwerte.

12. Verwendung nach Anspruch 11, wobei das zementäre Mehrkomponenten-Mörtelsystem ferner Silikastaub umfasst.

13. Verwendung nach Anspruch 12, wobei das zementäre Mehrkomponenten-Mörtelsystem ein Zweikomponenten-Mörtelsystem ist, wobei das Zweikomponenten-Mörtelsystem eine pulverförmige A-Komponente, umfassend den fein aufgemahlenen Hüttensand mit einer Mahlfeinheit im Bereich von 5000 bis 15000 cm²/g, und den Silikastaub, und eine wässrige B-Komponente mit einem Alkalisilicat-basierten Bestandteil, umfasst.
